# EUROPEAN PATENT APPLICATION

(11) **EP 2 437 235 A1**
(43) Date of publication of application: **04.04.2012**
(21) Application number: 11183551.8
(22) Date of filing: 30.09.2011
(51) Int. Cl.: G09B 9/02, G09B 19/16

(54) **Method and system for training a gas turbine engine test cell operator**

(30) Priority: 30.09.2010 US 895252
(71) Applicant: General Electric Company, Schenectady, NY 12345 (US)
(72) Inventor: Stone, Roy Lee, Springdale, OH Ohio 45246 (US); Mudman, Renee Jean Feulner, Springdale, OH Ohio 45246 (US); Anderson, Anthony Lee, Springdale, OH Ohio 45246 (US); Masters, Michael Edward, Springdale, OH Ohio 45246 (US); Meyers, Timothy Michael, Springdale, OH Ohio 45246 (US); Loux, Charles H., St. Paul, MN Minnesota 55107 (US); Simon, Kenneth William, St. Paul, MN Minnesota 55107 (US); Losness, Thomas Daniel, St. Paul, MN Minnesota 55107 (US); Duvic, Larry Dean, St. Paul, MN Minnesota 55107 (US)
(74) Representative: Williams, Andrew Richard

(57) **Abstract**

A system for training a gas turbine engine test cell operator during a simulated engine test is provided. The system includes an operator console (102), an instructor console (104), and a host computer (106) communicatively coupled to the operator console and the instructor console. The host computer includes a software engine model (204), and a data acquisition and control system (DACS) (54) configured to transmit data to the software engine model, wherein the data is indicative of at least one of an operator input received from the operator console and an instructor input received from the instructor console, the software engine model configured to transmit response data to the DACS to simulate that an operational state of a live engine (52) has changed in response to the at least one of the operator input and the instructor input.

## Description

### BACKGROUND OF THE INVENTION

The field of this disclosure relates generally to gas turbine engines and, more particularly, to methods and systems for training a gas turbine engine test cell operator.

Many known gas turbine engine testing facilities employ test cells in which gas turbine engines are tested for proper operation prior to being used in the field. These test cells are often operated by test cell operators that have been trained by observing experienced operators during actual engine testing. However, test cell operators that are trained during actual engine testing are rarely given the opportunity to experience abnormal operating conditions because engine faults cannot be simulated in a live engine without risking damage to the engine, damage to the testing facility, and injury to the testing personnel. Thus, while many known testing methods may expose operators to normal operating conditions of a gas turbine engine, these methods are often inefficient and incomplete because they occur over an extended period of time (e.g., a few years) and because abnormal operating conditions requiring abnormal responses are rarely experienced.

### BRIEF DESCRIPTION OF THE INVENTION

In one aspect, a method for training a gas turbine engine test cell operator during a simulated engine test is provided. The method includes transmitting, from a data acquisition and control system (DACS) to a software engine model, data indicative of at least one of an operator input and an instructor input. The method further includes receiving the data at the software engine model and transmitting response data from the software engine model to the DACS, the response data simulating to the DACS that an operational state of a live engine has changed in response to the at least one of an operator input and an instructor input. The method also includes receiving the response data at the DACS and outputting an indication of the changed operational state to the operator based on the response data.

In another aspect, a system for training a gas turbine engine test cell operator during a simulated engine test is provided. The system includes an operator console, an instructor console, and a host computer communicatively coupled to the operator console and the instructor console. The host computer includes a software engine model and a data acquisition and control system (DACS) configured to transmit data to the software engine model, wherein the data is indicative of at least one of an operator input received from the operator console and an instructor input received from the instructor console. The software engine model is configured to transmit response data to the DACS to simulate that an operational state of a live engine has changed in response to the at least one of the operator input and the instructor input.

In another aspect, a method of assembling a system for training a gas turbine engine test cell operator during a simulated engine test is provided. The method includes providing a software engine model and providing a data acquisition and control system (DACS) configured to transmit data to the software engine model, wherein the data is indicative of at least one of an operator input and an instructor input. The method further includes communicatively coupling the software engine model to the DACS such that the software engine model is configured to transmit response data to the DACS to simulate that an operational state of a live engine has changed in response to the at least one of the operator input and the instructor input.

### BRIEF DESCRIPTION OF THE DRAWINGS

Figure 1 is a data flow diagram for testing a live engine using a data acquisition and control system (DACS);
Figure 2 is a schematic illustration of a test cell training simulator system; and
Figure 3 is a data flow diagram for using the data acquisition and control system (DACS) of Figure 1 with the test cell training simulator system of Figure 2.

### DETAILED DESCRIPTION OF THE INVENTION

The following detailed description illustrates exemplary methods and systems that may be used for training a gas turbine engine test cell operator by way of example and not by way of limitation. The description enables one of ordinary skill in the art to make and use the disclosure, and the description describes several embodiments, adaptations, variations, alternatives, and uses of the disclosure, including what is presently believed to be the best mode of carrying out the disclosure. The disclosure is primarily described herein as being applied to one exemplary embodiment, namely, methods and systems for training gas turbine engine test cell operators. However, it is contemplated that this disclosure has general application to a broad range of systems and a variety of consumer and/or industrial applications.

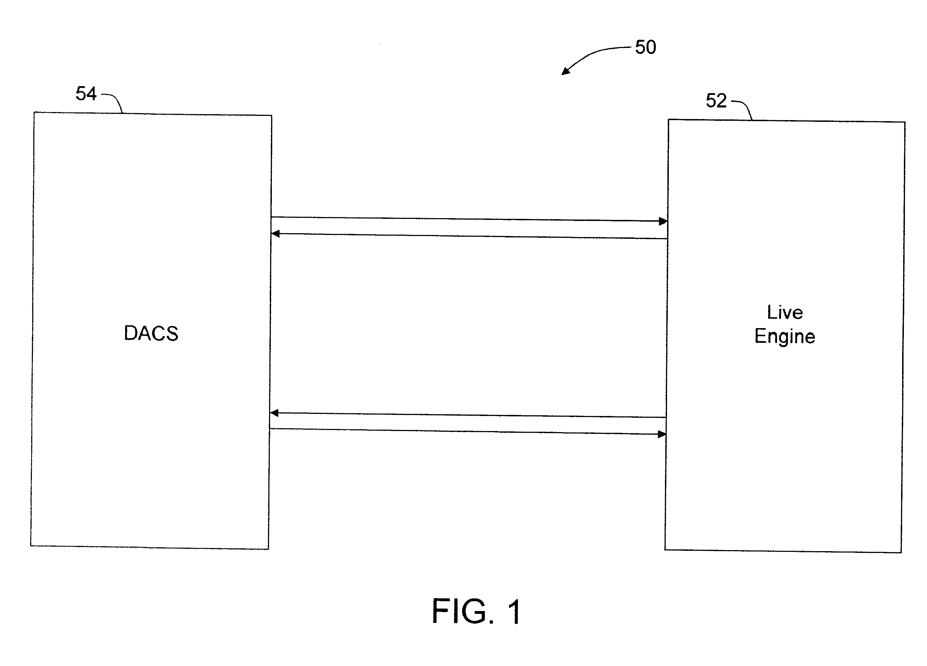

Figure 1 is a data flow diagram (DFD) 50 for testing a live engine 52 (e.g., a gas turbine engine) using a data acquisition and control system (DACS) 54. In the exemplary embodiment, DACS 54 transmits operator inputs to a live engine 52 (e.g., to the avionics bus of live engine 52), and an operational state of live engine 52 is changed in response to the operator inputs. Live engine 52 then transmits response data indicative of the changed operational state (e.g., data collected using probes mounted within live engine 52) to DACS 54, and DACS 54 compares the response data with predetermined operational limits of live engine 52 to evaluate whether live engine 52 is operating properly. As used herein, the term "live engine" refers to an actual, operating engine, as opposed to a simulation of an engine.

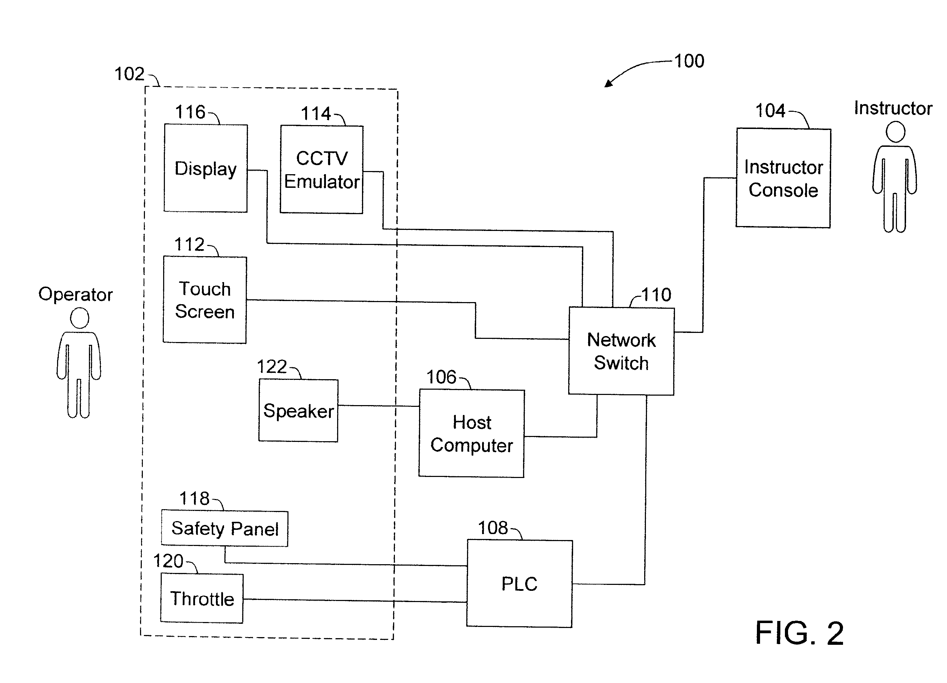

Figure 2 is a schematic illustration of an exemplary test cell training simulator system 100. In the exemplary embodiment, system 100 includes an operator console 102, an instructor console 104, a host computer 106, and a programmable logic controller (PLC) 108 communicatively coupled to one another across a network switch 110. Operator console 102 includes a touch screen 112, a closed-circuit television (CCTV) emulator 114, a display 116, a throttle 120, a safety panel 118 (i.e., a panel of buttons configured to provide emergency services such as, for example, fire suppression, fuel shutoff, and emergency throttle control), and a speaker 122 to facilitate simulating an actual control room environment, as described below. Instructor console 104 includes a display and a printer. In other embodiments, operator console 102 and instructor console 104 may have any suitable components communicatively coupled to one another in any suitable manner that facilitates enabling system 100 to function as described herein.

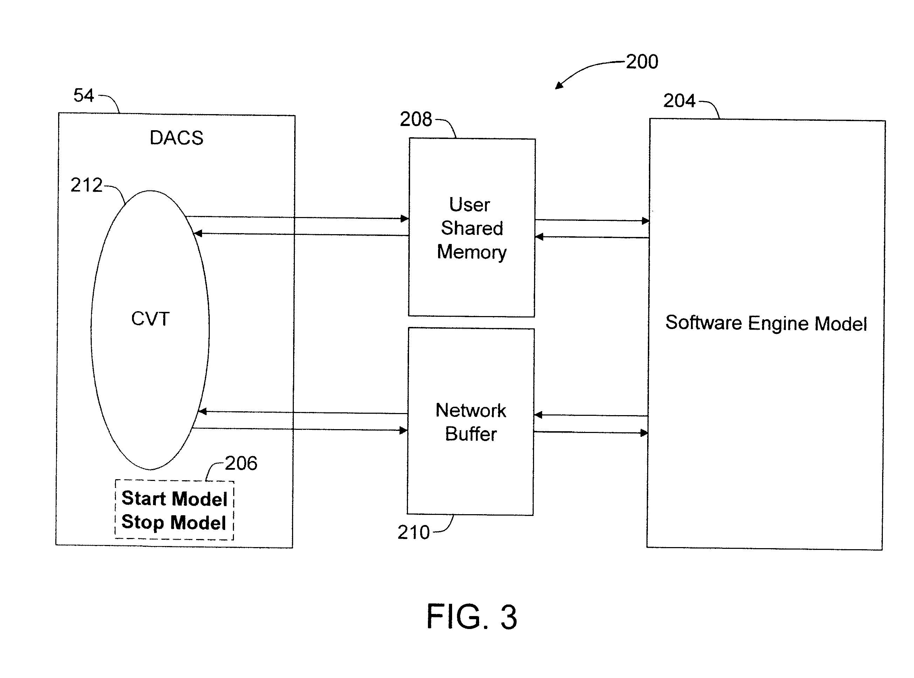

Figure 3 is a data flow diagram (DFD) 200 for using DACS 54 with test cell training simulator system 100. In the exemplary embodiment, DFD 200 shows data transmission between DACS 54, which is stored on host computer 106, and a software engine model 204 of a gas turbine engine, which is also stored on host computer 106. As described above, DACS 54 is configured for use in the field to test live engines (e.g., DACS 54 is configured to receive response data from live engine 52 and compare the response data with operational limits to evaluate whether live engine 52 is operating properly). In the exemplary embodiment, software engine model 204 is configured to transmit response data in a format used by live engine 52 (e.g., in a format used by the avionics bus of live engine 52) and in a manner that simulates the response data being transmitted from live engine 52 (e.g., software engine model 204 simulates the transmission of response data gathered using probes mounted within live engine 52). In the exemplary embodiment, DACS 54 is a separate, stand-alone system from software engine model 204, and DACS 54 is selectively communicatively coupled to software engine model 204 (as opposed to live engine 52) when DACS 54 is used with test cell training simulator system 100, such that DACS 54 functions as if it is receiving response data from live engine 52 when the response data is actually being received from software engine model 204.

In the exemplary embodiment, the processes executed by software engine model 204 are physically separate executable processes from the processes executed by DACS 54, and the execution of software engine model 204 is therefore controlled by invocation of start model and stop model script functions 206. In one embodiment, a series of files may be stored on host computer 106, and the files contain engine configuration information with definitions of parameters transmitted to, and received from, software engine model 204, along with anomaly parameter definitions, calculations performed on data, encapsulated engine test information, a layout of graphical displays that can be presented to an operator and/or an instructor, and a layout of reports that can be generated by an instructor. In the exemplary embodiment, two primary shared memory interfaces are present between DACS 54 and software engine model 204 for transferring data between DACS 54 and software engine model 204, namely a user shared memory buffer 208 and a network buffer 210 (e.g., throttle resolver inputs may be transmitted through shared memory buffer 208).

During an exemplary training session using system 100 and DFD 200, a test cell operator in training is seated at operator console 102, and an instructor is seated at instructor console 104. From instructor console 104, the instructor is able to view a display that includes a display of the screens viewable by the operator at operator console 102 (e.g., the instructor is provided with captions of display 116 and touch screen 112). Alternatively, two operators may be seated at operator console 102 and may take turns during the simulated engine test (e.g., the two operators may rotate positions halfway through the simulated engine test).

To initiate a simulated engine test, an operator inputs instructions to DACS 54 from operator console 102 as if to start live engine 52 (e.g., the operator progresses through a series of startup checklists such as, for example, to set starter air pressure and fuel pressure, turn on power to the full authority digital control, and touch a "start" button on touch screen 112). DACS 54 recognizes the operator's inputs and transmits associated data to software engine model 204 through buffers 208, 210. Software engine model 204 uses this data to determine an initial state of a simulated engine and transmits response data back to DACS 54 through buffers 208, 210. DACS 54 receives the response data and updates a current value table (CVT) 212 in accordance with the initial state of the simulated engine, and DACS 54 facilitates outputting information to the operator that is indicative of the initial state of the simulated engine (i.e., information that is indicative of the fact that the simulated engine has begun its startup such as, for example, indications on display 116 that the simulated engine's rotors are rotating and that fuel has been ignited in the combustor). Subsequently, the operator inputs additional instructions to DACS 54 in order to bring the simulated engine through a progression of operator-desired operational states that mimics the testing procedures for testing live engine 52. With each subsequent input from the operator, DACS 54 transmits associated data to software engine model 204, software engine model 204 changes the state of the engine accordingly and transmits relevant response data to DACS 54, and DACS 54 facilitates outputting information to the operator at operator console 102 that is indicative of the changed state of the simulated engine. This interaction between the operator and software engine model 204 continues until the simulated engine test is complete.

In the exemplary embodiment, the instructor can also input instructions to DACS 54 from instructor console 104 during the simulated engine test to generate instructor-desired changes in the operational state of the simulated engine. When the instructor inputs instructions at instructor console 104, DACS 54 recognizes the instructor inputs and transmits associated data to software engine model 204 through buffers 208, 210. Software engine model 204 uses the data to change an operational state of the simulated engine and transmits response data back to DACS 54 through buffers 208, 210. DACS 54 receives the response data, updates current value table (CVT) 212 in accordance with the instructor-desired change in the state of the simulated engine, and facilitates outputting information to the operator at operator console 102 that is indicative of the instructor-desired change in the state of the simulated engine. As such, the instructor can affect the manner in which software engine model 204 functions during the simulated engine test (i.e., the instructor can input instructions to software engine model 204 to instigate operational faults in the simulated engine at any point during the simulated engine test).

For example, when the operator inputs would otherwise change the operational state of the simulated engine in a relatively foreseeable manner, the instructor can instruct software engine model 204 to respond to the operator inputs in an abnormal manner that the operator likely would not have foreseen, thereby overriding the operator-desired change in engine operation. In response to the abnormal engine conditions instigated by the instructor, an audible alarm may be sounded to the operator at operator console 102. In other embodiments, the audible alarm may be sounded to the operator at operator console 102 in light of abnormal engine conditions that were not instigated by the instructor (e.g., in light of an engine parameter that goes beyond the limits as a result of operator inputs). In the event that an audible alarm is sounded, the operator may then enter another operator input indicative of another operator-desired change in engine operation via touch screen 112, throttle 120, or safety panel 118 (e.g., to provide an operator-desired emergency service such as, for example, fire suppression, fuel shutoff, or emergency throttle control). Furthermore, while an alarm may be sounded in response to some instructor inputs, other instructor inputs may not affect the operational state of the simulated engine in a manner that triggers an alarm. Additionally, it should be noted that in some embodiments DACS 54 and instructor console 102 may facilitate outputting indications to the operator of any and all changes in operation of the simulated engine, even seemingly normal changes in operation that are not a result of operator inputs or instructor inputs.

In the exemplary embodiment, an image of live engine 52 is displayed on CCTV emulator 114, and realistic sounds of a control room are generated via speaker 122 such that the operator views and hears the simulated engine as if the operator is seated in an actual control room viewing and hearing live engine 52 (e.g., the operator hears increases in noise that correspond to simulated increases in thrust, and the operator hears alarms that correspond to simulated abnormal operating conditions). In some embodiments, operator console 102 may also be provided with the following realistic features: tactile input of changes in engine power level through handles of throttle 120 (e.g., to enable an operator to get a better feel for engine responses to throttle movement); appropriate relationships between live engine 52 and control features; data presentation that is common with an actual testing environment; safety panel 118 being identical to safety panels typically found in modern test cells; and an improved configurability of the data arrangements on display 116.

Because the operator is provided with visual representations of the simulated engine via display 116, touch screen 112, and CCTV emulator 114 and because the operator is provided with audio representations of control room noises via speaker 122, the operator is given a realistic presentation of normal and abnormal engine testing conditions in subtle ways that relate to a dynamic set of engine parameters, thereby permitting the operator to sense an impending problem as it is developing. In some embodiments, the following realistic testing conditions may be simulated: dry motoring; start sequence; idle test; seal break-in; performance test; vibration survey; acceleration test; engine over temperature; personnel door open; main door open; hung start; lack of fan rotation during start; hot start; fan over speed at takeoff; high vibration of number one bearing; high core engine vibration; high vibration for the turbine center frame (TCF); high under-cowl temperature; fire loop fire detection; low oil quantity; and low engine inlet fuel pressure. Additionally, in other embodiments, the following facility parameters may be simulated: fuel pressure, fuel tank level, starter air pressure, and cell depression.

The methods and systems described herein facilitate enabling a gas turbine engine test cell operator to be trained in a mock test cell control room using a software engine model that transmits response data that accurately simulates thermodynamic, aerodynamic, and rotor dynamic characteristics of a live engine. The methods and systems described herein further facilitate enabling a software engine model to transmit data to a DACS that is used in the field to test live engines such that the DACS functions as if it is receiving data from a live engine. The methods and systems described herein also facilitate enabling an instructor to evaluate whether an operator properly responds to both normal and abnormal operational states of an engine in a timely manner (e.g., via data logged by the DACS regarding all actions taken by the operator and the time in which those actions were taken) and to use printed reports and screen snapshots of the data collected by the DACS as representations of the operator's performance. Additionally, the methods and systems described herein facilitate efficiently and completely training a gas turbine engine test cell operator to properly respond to real-world engine operation conditions (e.g., training an operator to operate a new engine that is to be introduced into a test cell or training an operator to respond to engine anomalies) without the risk of damaging an engine, damaging a training facility, or injuring personnel.

As will be appreciated by one skilled in the art and based on the foregoing specification, the above-described embodiments of the invention may be implemented using computer programming or engineering techniques including computer software, firmware, hardware, or any combination or subset thereof, wherein one technical effect is training a gas turbine engine test cell operator. Any resulting program, having computer-readable code means, may be embodied or provided within one or more computer-readable media, thereby making a computer program product, i.e., an article of manufacture, according to the discussed embodiments of the invention. The computer readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, and/or by transmitting the code over a network.

Exemplary embodiments of methods and systems for training a gas turbine engine test cell operator are described above in detail. The methods and systems are not limited to the specific embodiments described herein, but, rather, some components of the methods and systems may be utilized independently and separately from other components. For example, the methods and systems described herein may have other industrial and/or consumer applications and are not limited to practice in the field of gas turbine engines. Rather, the present invention can be implemented and utilized in connection with many other industries.

Various aspects of embodiments of the present invention are indicated in the following clauses:
1. A method for training a gas turbine engine test cell operator during a simulated engine test, said method comprising:
   transmitting, from a data acquisition and control system (DACS) to a software engine model, data indicative of at least one of an operator input and an instructor input;
   receiving the data at the software engine model;
      transmitting response data from the software engine model to the DACS, the response data simulating to the DACS that an operational state of a live engine has changed in response to the at least one of an operator input and an instructor input;
   receiving the response data at the DACS; and
   outputting an indication of the changed operational state to the operator based on the response data.
2. A method in accordance with Clause 1, wherein said method further comprises receiving the operator input at the DACS during the simulated engine test, the operator input indicative of an operator-desired change in engine operation.
3. A method in accordance with Clause 2, wherein said method further comprises receiving the instructor input at the DACS during the simulated engine test, the instructor input indicative of an instructor-desired change in engine operation, wherein the instructor-desired change in engine operation overrides the operator-desired change in engine operation such that the changed operational state is the instructor-desired change in engine operation.
4. A method in accordance with Clause 3, wherein said method further comprises sounding an audible alarm to the operator in response to the instructor-desired change in engine operation.
5. A method in accordance with either of Clause 3 or 4, further comprising receiving at the DACS another operator input indicative of another operator-desired change in engine operation in response to the instructor-desired change in engine operation.
6. A method in accordance with Clause 5, wherein said receiving at the DACS another operator input comprises receiving the another operator input via a safety panel, the another operator input being indicative of an operator-desired emergency service.
7. A method in accordance with Clause 6, wherein at least one of the operator input and the another operator input are received at the DACS from a touch screen.
8. A method in accordance with any one of the preceding Clauses, wherein said method further comprises providing a realistic visual presentation to the operator of a live engine on a closed-circuit television (CCTV) emulator.
9. A system for training a gas turbine engine test cell operator during a simulated engine test, said system comprising:
   an operator console;
   an instructor console; and
   a host computer communicatively coupled to said operator console and said instructor console, said host computer comprising:
      a software engine model; and
      a data acquisition and control system (DACS) configured to transmit data to said software engine model, wherein the data is indicative of at least one of an operator input received from said operator console and an instructor input received from said instructor console, said software engine model configured to transmit response data to said DACS to simulate that an operational state of a live engine has changed in response to the at least one of the operator input and the instructor input.
10. A system in accordance with Clause 9, wherein said operator console comprises at least one of a safety panel and a throttle that facilitate enabling the operator to enter the operator input during the simulated engine test.
11. A system in accordance with either of Clause 9 or 10, wherein said operator console comprises a touch screen that facilitates enabling the operator to enter the operator input during the simulated engine test.
12. A system in accordance with any one of Clauses 9 to 11, wherein said instructor console is configured to enable an instructor to view at least one display screen that is viewable by the operator during the simulated engine test.
13. A system in accordance with any one of the preceding Clauses, wherein said operator console comprises a closed-circuit television (CCTV) emulator, said operator console configured to provide a realistic visual presentation of a live engine to the operator during the simulated engine test via said CCTV emulator.
14. A system in accordance with any one of the preceding Clauses, wherein said operator console is configured to provide a realistic audible presentation of a control room alarm and an engine sound to the operator during the simulated engine test.
15. A method of assembling a system for training a gas turbine engine test cell operator during a simulated engine test, said method comprising:
   providing a software engine model;
   providing a data acquisition and control system (DACS) configured to transmit data to the software engine model, wherein the data is indicative of at least one of an operator input and an instructor input; and
   communicatively coupling the software engine model to the DACS such that the software engine model is configured to transmit response data to the DACS to simulate that an operational state of a live engine has changed in response to the at least one of the operator input and the instructor input.
16. A method in accordance with Clause 15, further comprising providing at least one of a safety panel and a throttle that facilitate enabling the operator to enter the operator input during the simulated engine test.
17. A method in accordance with either one of Clauses 15 or 16, further comprising providing a touch screen that facilitates enabling the operator to enter the operator input during the simulated engine test.
18. A method in accordance with any one of Clauses 15 to 17, further comprising providing an instructor console that facilitates enabling an instructor to view at least one display screen that is viewable by the operator during the simulated engine test.
19. A method in accordance with any one of Clauses 15 to 18, further comprising providing an operator console configured to provide a realistic visual presentation of a live engine to the operator during the simulated engine test via a closed-circuit television (CCTV) emulator.
20. A method in accordance with any one of Clauses 15 to 19, further comprising providing an operator console configured to provide a realistic audible presentation of at least one of a control room alarm and an engine sound to the operator during the simulated engine test.

## Claims

1. A system for training a gas turbine engine test cell operator during a simulated engine test, said system comprising:
an operator console (102);
an instructor console (104); and
a host computer (106) communicatively coupled to said operator console and said instructor console, said host computer comprising:
a software engine model (204); and
a data acquisition and control system (DACS) (54) configured to transmit data to said software engine model, wherein the data is indicative of at least one of an operator input received from said operator console and an instructor input received from said instructor console, said software engine model configured to transmit response data to said DACS to simulate that an operational state of a live engine (52) has changed in response to the at least one of the operator input and the instructor input.

2. A system in accordance with Claim 1, wherein said operator console (102) comprises at least one of a safety panel (118) and a throttle (120) that facilitate enabling the operator to enter the operator input during the simulated engine test.

3. A system in accordance with either Claim 1 or 2, wherein said operator console (102) comprises a touch screen (112) that facilitates enabling the operator to enter the operator input during the simulated engine test.

4. A system in accordance with any one of the preceding Claims, wherein said instructor console (104) is configured to enable an instructor to view at least one display screen that is viewable by the operator during the simulated engine test.

5. A system in accordance with any one of the preceding Claims, wherein said operator console (102) comprises a closed-circuit television (CCTV) emulator (114), said operator console configured to provide a realistic visual presentation of a live engine (52) to the operator during the simulated engine test via said CCTV emulator.

6. A system in accordance with any one of the preceding Claims, wherein said operator console (102) is configured to provide a realistic audible presentation of a control room alarm and an engine sound to the operator during the simulated engine test.

7. A method for training a gas turbine engine test cell operator during a simulated engine test, said method comprising:
transmitting, from a data acquisition and control system (DACS) (54) to a software engine model (204), data indicative of at least one of an operator input and an instructor input;
receiving the data at the software engine model;
transmitting response data from the software engine model to the DACS, the response data simulating to the DACS that an operational state of a live engine (52) has changed in response to the at least one of an operator input and an instructor input;
receiving the response data at the DACS; and
outputting an indication of the changed operational state to the operator based on the response data.

8. A method in accordance with Claim 7, wherein said method further comprises receiving the operator input at the DACS (54) during the simulated engine test, the operator input indicative of an operator-desired change in engine operation.

9. A method in accordance with Claim 8, wherein said method further comprises receiving the instructor input at the DACS (54) during the simulated engine test, the instructor input indicative of an instructor-desired change in engine operation, wherein the instructor-desired change in engine operation overrides the operator-desired change in engine operation such that the changed operational state is the instructor-desired change in engine operation.

10. A method in accordance with Claim 9, wherein said method further comprises sounding an audible alarm to the operator in response to the instructor-desired change in engine operation.

11. A method in accordance with either of Claim 9 or 10, further comprising receiving at the DACS (54) another operator input indicative of another operator-desired change in engine operation in response to the instructor-desired change in engine operation.

12. A method in accordance with Claim 11, wherein said receiving at the DACS (54) another operator input comprises receiving the another operator input via a safety panel (118), the another operator input being indicative of an operator-desired emergency service.

13. A method in accordance with Claim 12, wherein at least one of the operator input and the another operator input are received at the DACS from a touch screen (112).

14. A method in accordance with any one of the Claims 7 to 13, wherein said method further comprises providing a realistic visual presentation to the operator of a live engine on a closed-circuit television (CCTV) emulator (114).
